# EUROPÄISCHE PATENTSCHRIFT

(11) **EP 0 573 776 B1**
(45) Veröffentlichungstag und Bekanntmachung des Hinweises auf die Patenterteilung: **29.12.1997**
(21) Anmeldenummer: 93107156.7
(22) Anmeldetag: 03.05.1993
(51) Int. Cl.: G11B 23/50

(54) **Reinigungsvorrichtung für optische oder magnetooptische Platten**
Cleaning device for optical or magneto-optical discs
Dispositif de nettoyage de disques optiques ou magnéto-optiques

(30) Priorität: 08.05.1992 DE 9206174 U
(43) Veröffentlichungstag der Anmeldung: 15.12.1993
(73) Patentinhaber: HOECHST AKTIENGESELLSCHAFT, 65926 Frankfurt am Main (DE)
(72) Erfinder: Reuter, Klaus, Dipl.-Ing., W-6200 Wiesbaden (DE); Schön, Klaus-Peter, W-6200 Wiesbaden (DE)

(56) Entgegenhaltungen:
- EP-A- 0 168 642
- EP-A- 0 417 726
- US-A- 4 854 001

## Beschreibung

Die Erfindung betrifft eine Reinigungsvorrichtung für optische oder magneto-optische Platten aus zwei, durch ein Rückenband miteinander verbundenen rechteckigen oder quadratischen Teilen, die, ähnlich einem Buch, zusammenklappbar und entlang ihren Seitenkanten einrastbar sind, wobei der eine Teil zumindest eine Mulde aufweist, die Utensilien für die Reinigung einer magneto-optischen oder optischen Speicherplatte aufnimmt und der andere Teil eine entlang der vier Seitenkanten geschlossene Umrandung aufweist, die eine Plattenkassette der zum Reinigen eingelegten magneto-optischen oder optischen Speichelplatte unschliesst. Eine derartige Vorrichtung ist aus der EP-A-0417 726 bekannt.

Optische und magneto-optische Speicherplatten müssen nach längerer Einsatzzeit, von beispielsweise 1000 Betriebsstunden, von Staub, Fingerabdrücken und elektrostatischen Oberflächenladungen auf der Aufzeichnungsschicht gereinigt werden. Dabei ist es erforderlich, den Verschluß bzw. Shutter der Plattenkassette, die die Speicherplatte einschließt, zu öffnen und während des Reingiungsvorganges zu arretieren. Die für die Reinigung der Aufzeichnungsschicht erforderlichen Utensilien, wie Pinsel, Bürsten, Flüssigkeiten, Kissen, Tücher, Drehgriff für die Speicherplatte, werden nach Möglichkeit griffbereit in einem gemeinsamen Behälter untergebracht.

Dei oben bereits genannte EP-A-0 417 726 zeigt einen buchähnlichen Behälter, in dem eine Plattenkassette mit einer optischen Speicherplatte bei geöffnetem Verschluß gehalten ist. Der Behälter enthält eine Verschlußarretierung, um den Plattenkassettenverschluß zu öffnen, und eine Spindel, die die optische Speicherplatte so abstützt, daß sie rotieren kann. Eine Aufsatzvorrichtung zum Drehen der Speicherplatte vereinfacht die manuelle Drehung der Speicherplatte während des Reinigungsvorganges, der mit Hilfe eines Reinigungstuches und einer Reinigungsflüssigkeit ausgeführt wird. Die Drehaufsatzvorrichtung und die Rinigungsmaterialien sind in dem buchartigen Gehäuse untergebracht.

Hierzu ist eine einzelne Mulde vorgesehen, in der die Reinigungsmaterialien und die Drehaufsatzvorrichtung beispielsweise in Gehäusen untergebracht sind. Die beiden Teile des Behälters sind nicht komplementär zueinander ausgebildet.

Eine andere auf dem Markt befindliche Reinigungseinrichtung weist ein elektrisch angetriebenes Spindellager auf, auf das die zu reinigende Speicherplatte aufgesetzt wird, um während des Reinigungsvorganges elektrisch angetrieben zu rotieren. Die Reinigung geschieht in der Weise, daß ein mit der Reinigungsflüssigkeit getränktes Reinigungstuch gegen den vom Shutter freigegebenen Ausschnitt der Speicherplatte angedrück wird. Diese Reinigungseinrichtung arbeitet vollautomatisch, indem das Reinigungstuch bzw. das Reinigungskissen radial in Richtung des Umfanges der Speicherplatte motorisch bewegt wird, während diese gleichzeitig rotiert. Nähere Untersuchungen zeigen, daß bei dieser vollautomatischen Reinigungseinrichtung die Reinigungskissen sehr häufig ungleichmäßig auf der Oberfläche der zu reinigenden Speicherplatte aufliegen, so daß die Reinigung sehr ungleichmäßig erfolgt. Eine individuelle Dosierung des Andruckes des Reinigungskissens an die Speicherplatte ist nicht möglich.

Eine weitere auf dem Markt befindliche Reinigungseinrichtung, bei der die Speicherplatte manuell gedreht wird, enthält ein Spindellager mit einem Dorn sowie eine Arretierung für den Plattenkassettenverschluß, die in der Reinigungseinrichtung eingebaut sind. Die Speicherplatte wird auf das Spindellager aufgesetzt und mit einem Griff in Drehung versetzt, während mit dem mit einer Reinigungsflüssigkeit getränktem Reinigungstuch der vom geöffneten Verschluß freigegebene Bereich der Speicherplatte gereinigt wird.

Eine weitere bekannte, vollautomatische Reinigungseinrichtung enthält eine motorisch angetriebene Bürste, die mit einer spiralförmigen Nut als Reinigungselement versehen ist. Der Antrieb der zu reinigenden Speicherplatte erfolgt durch ein elektrisch angetriebenes Lager, auf dem die Speicherplatte aufliegt. Synchron mit diesem Antrieb rotiert die Reinigungsbürste an Ort und Stelle. Eine Naßreinigung ist mit dieser Reinigungseinrichtung nicht möglich.

Aufgabe der Erfindung ist es, eine kompakte, manuelle bedienbare Reinigungsvorrichtung zu schaffen, die die Reinigungsutensilien und den Drehgriff für die zu reinigende Speicherplatte und die Plattenkassette lagefest aufnimmt und außer Betrieb platzsparend aufbewahrt werden kann.

Zur Lösung dieser Aufgabe zeichnet sich die Reinigungsvorrichtung dadurch aus, daß die Innenseite des einen Teils erhaben ausgebildet ist und drei Mulden enthält, von denen jede eine dem Umriß einer aufzunehmenden Utensilie angepaßte Gestalt hat und daß die Innenseite des anderen Teils komplementär zu dem einen Teil ausgeformt ist.

In Weiterbildung der Erfindung weist das die Speicherplatte aufnehmende Teil ein Plattenlager auf, das die Speicherplatte beim Einlegen innerhalb der Plattenkassette soweit anhebt, daß die Speicherplatte reibungsfrei drehbar ist.

In Weiterbildung der Erfindung ist innerhalb des einen Teils eine Arretierung zum Offenhalten eines Verschlusses der Plattenkassette angeordnet. Die Arretierung ist zweckmäßigerweise ein Steg, der parallel zu und in einem Abstand von etwa 8 bis 12 mm von der Umrandung angebracht ist, und es betragen die Länge der Arretierung 32 bis 40 mm, die Höhe 5 mm und die Breite 4 bis 5 mm.

In Ausgestaltung der Erfindung ist entlang der einen Seitenkante der Umrandung des die Speicherplatte aufnehmenden Teils ein abgestufter Anschlag mit einer abgerundeten Griffvertiefung angeordnet und liegt eine eingelegte Plattenkassette gegen diesen Anschlag und die Innenseite der gegenüberliegenden Seitenkante der Umrandung an.

Die weitere Ausgestaltung der Erfindung ergibt sich aus den Merkmalen der Schutzanprüche 7 bis 13.

Mit der Erfindung wird der Vorteil erzielt, daß eine sehr kompakte Reinigungsvorrichtung sehr kostengünstig hergestellt werden kann, da die Innenseiten der beiden Teile der Reinigungsvorrichtung in einem Vorgang aus Kunststoffolie tiefgezogen werden, so daß eine nachträgliche Montage von Teilen, wie dem Plattenlager oder der Arretierung für den Plattenkassetten-Verschluß, entfallen. Aufgrund der manuellen Drehung der zu reinigenden Speicherplatte ist es auch möglich, den Andruck des Reinigungstuches an die Speicherplatte feinfühlig zu dosiern und den Reinigungsvorgang visuell zu kontrollieren bzw. zu steuern, was bei vollautomatischen Reinigungseinrichtungen nicht möglich ist.

Die Erfindung wird im folgenden anhand eines zeichnerisch dargestellten Ausführungsbeispiels näher erläutert. Es zeigen:
- Figur 1: eine Draufsicht auf eine geöffnete Reinigungsvorrichtung nach der Erfindung,
- Figur 2: eine Seitenansicht der ähnlich einem Buch zusammengeklappten Reinigungsvorrichtung nach Figur 1,
- Figur 3: eine Draufsicht auf einen Deckel, der eine Mulde für die Aufnahme von Reinigungsverbunden verschließt,
- Figur 4: eine Seitenansicht eines Drehknopfes für die manuelle Rotation der zu reinigenden Speicherplatte in der Reinigungsvorrichtung,
- Figuren 5a und 5b: eine Unteransicht des Drehknopfes nach Figur 4 und einen Gummiring, und
- Figur 6: eine Draufsicht auf die aufgeklappte Reinigungsvorrichtung mit eingelegter Plattenkassette, deren Verschluß geöffnet ist.

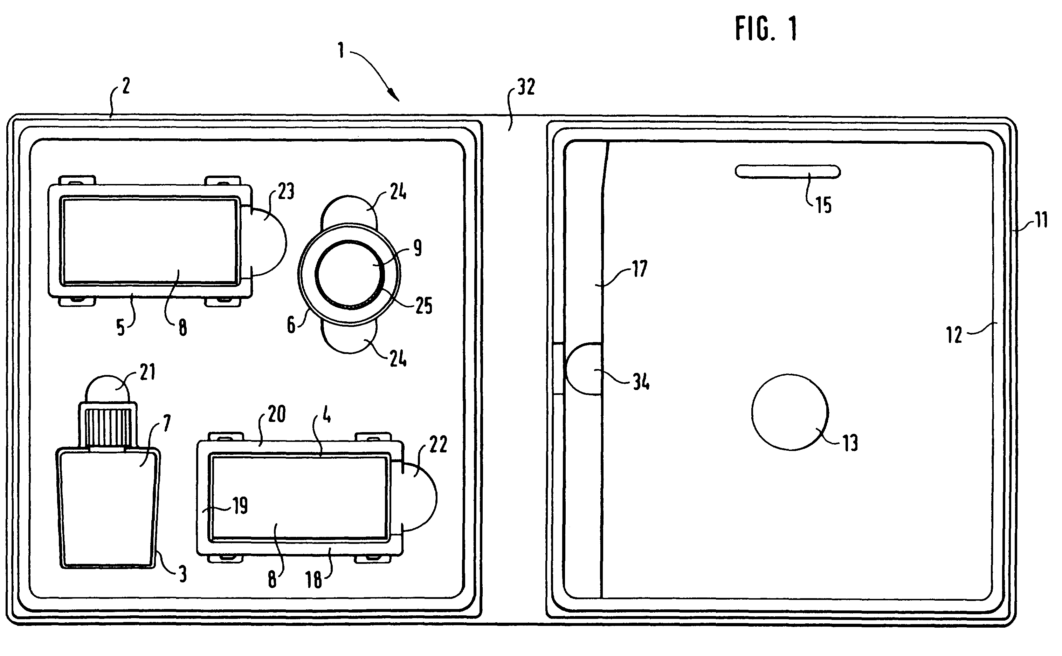

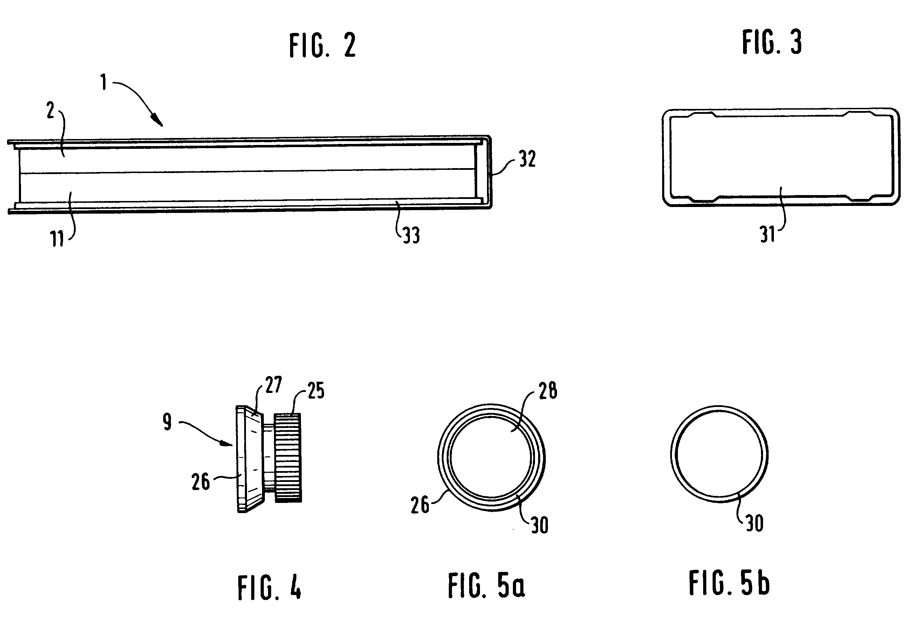

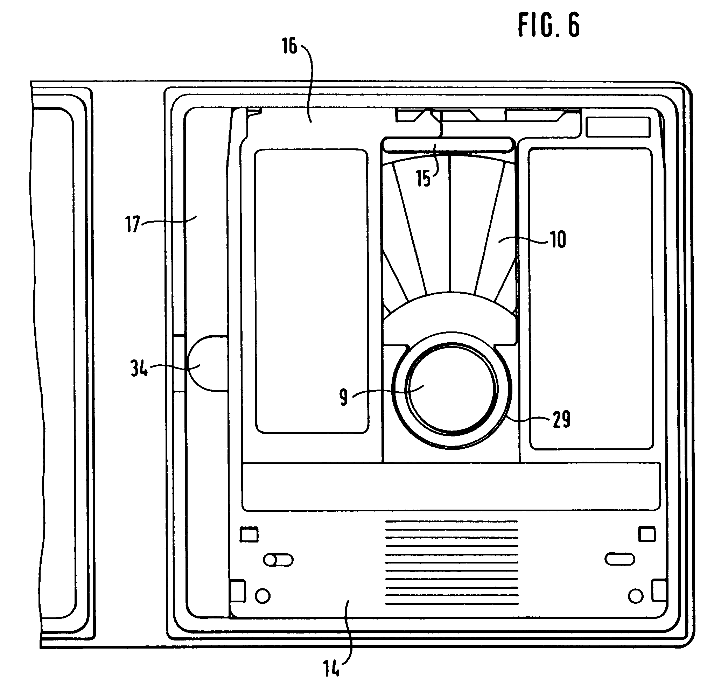

In Figur 1 ist die aufgeklappte bzw. geöffnete Reinigungsvorrichtung 1 dargestellt, die aus zwei Teilen 2, 11 besteht, die durch ein Rückenband 32 miteinander verbunden sind. Die Teile 2 und 11 sind rechteckig oder quadratisch, wobei die Innenseite des einen Teils 2, in Figur 1 das linke Teil, erhaben ausgebildet ist und vier Mulden 3,4,5,6 aufweist, die die Utensilien 7,8,9 für die Reinigung einer magneto-optischen oder optischen Speicherplatte 10, wie sie in Figur 6 teilweise zu sehen ist, aufnehmen. Obgleich dies nicht dargestellt ist, können auch nur drei Mulden 3,4,5, vorhanden sein. Die Ausgestaltung der Mulden ist derart, daß sie jeweils eine den Umrissen der aufzunehmenden Utensilien 7,8,9 angepaßte Gestalt bzw. angepaßten Umfang haben. Bei den Utensilien handelt es sich um eine Flasche 7, die in die erste Mulde 3 eingepaßt ist, um Reinigungsverbunde bzw. Reinigungskissen 8 aus Textil- bzw. Stofftuch und Kunststoffolie, die in der zweiten und dritten Mulde 4,5 untergebracht sind, und um einen Drehknopf, den die vierte Mulde 6 aufnimmt. Die Flasche 7 und der Drehknopf 9 werden von den dazugehörigen Mulden 3 und 6 im Schnappsitz festgehalten. Die mit den Reinigungsverbunden 8 aufgefüllte zweite und dritte Mulde 4,5 verschließt jeweils ein Deckel 31, der in der Draufsicht in Figur 3 gezeigt ist. Die beiden Mulden 4,5 sind an drei Seiten von miteinander durchgängig verbundenen Randwülsten 18,19,20 umgeben. Die Randwülste 18 und 20 besitzen vorspringende Noppen, auf die im Schnappverschluß die Deckel 31 aufsitzen, die entsprechende Vorsprünge an den Seitenkanten aufweisen, die mit den Randwülsten 18 und 20 fluchten.

Die Innenseite des anderen Teils 11 der Reinigungsvorrichtung 1, in Figur 1 das rechte Teil, ist komplementär zu dem Teil 2 ausgeformt und besitzt entlang der vier Seitenkanten eine geschlossene Umrandung 12, die eine Plattenkassette 14 einer zum Reinigen eingelegten magneto-optischen oder optischen Speicherplatte 10, siehe Figur 6, umschließt. Das Teil 11 weist ein Plattenlager 13 auf, auf dem die Speicherplatte 10 aufliegt. Das Plattenlager 13 hebt die Speicherplatte 10 innerhalb der Plattenkassette beim Einlegen soweit an, daß die Speicherplatte reibungsfrei in der Plattenkassette gedreht werden kann. Nahe der oberen Seitenkante der Umrandung 12 in Figur 1 befindet sich eine Arretierung 15 als integrales Bauteil auf der Innenseite des Teils 11. Die Arretierung 15 hält einen geöffneten Verschluß bzw. Shutter 16 der Plattenkassette 14 offen, so daß in dem geöffneten Ausschnitt der Plattenkassette 14 die darunter befindliche Speicherplatte 10, vgl. Figur 6, für die Reinigung zugänglich ist.

Die Arretierung 15 ist ein Steg, der parallel zu und in einem Abstand von etwa 8 bis 12 mm von der Umrandung 12 verläuft und der beispielsweise eine Länge von 32 bis 40 mm, eine Höhe von 5 mm und eine Breite von 4 bis 5 mm hat.

Wie aus Figur 1, rechtes Teil, zu ersehen ist, schließt an die eine Seitenkante der Umrandung 12 des die Speicherplatte 10 aufnehmenden Teils 11 ein abgestufter Anschlag 17 an. In der Mitte des Anschlages 17 befindet sich eine abgerundete Griffvertiefung 34, die das Herausnehmen einer eingesetzten Plattenkassette 14 erleichtert, die gegen den Anschlag 17 und die Innenseite der gegenüberliegenden Seitenkante der Umrandung 12 anliegt.

Die beiden Teile 2 und 11 werden als Ganzes in einem einzigen Arbeitsgang, einschließlich der Mulden 3,4,5,6, den Randwülsten 18,19,20, der Arretierung 15, des Anschlages 17, des Plattenlagers 13 und der Umrandung 12, aus Kunststoffolie tiefgezogen, so daß nach der Herstellung dieser Teile weitere Arbeitsvorgänge zur Komplettierung der Reinigungsvorrichtung nicht mehr erforderlich sind. Die beiden Teile 2 und 11 sind nach dem Einlegen zweier Kartonverstärkungen üblicherweise mit einer Außenfolie verschweißt, auf die eine Hülle 33 aus einer transparenten Kunststoffolie, siehe Figur 2, geklebt oder geschweißt wird. Die Hülle 33 bildet zusammen mit dem Verbindungsstück der tiefgezogenen Folie zwischen den beiden Teilen 2, 11 und der Außenfolie auch das Rückenband 32 der Reinigungsvorrichtung. In Figur 2 ist der zusammengeklappte Zustand der Reinigungsvorrichtung 1 dargestellt, in welchem die beiden Teile entlang ihren Seitenkanten einrasten. Die zusammengeklappte Reinigungsvorrichtung hat eine buchähnliche Gestalt.

In den Figuren 4 und 5a ist der Drehknopf 9 in Seitenansicht bzw. in Unteransicht dargestellt. Der Drehknopf 9 besteht aus einem gerändelten Griffstück 25, das einen kleineren Durchmesser als ein konisch nach unten aufgeweitetes Aufsatzstück 27 hat. In der Grundfläche 26 des Drehknopfes 9 befindet sich ein Gummiring 30 (siehe Fig. 5b), der in eine umlaufende Nut eingepaßt ist. Der Gummiring ergibt beim Aufsitzen des Drehknopfes 9 auf der Speicherplatte einen Reibschluß mit der Speicherplatte 10, so daß diese durch die Drehung des Drehknopfes 9 mitgenommen wird. Wie aus der Untersicht nach Figur 5a ersichtlich ist, weist das Aufsatzstück 27 in seiner Grundfläche eine Aussparung 28 auf, in welcher die Nabe der Speicherplatte 10 Platz findet. Wie aus Figur 6 zu ersehen ist, zentriert das Aufsatzstück 27 die Speicherplatte 10 in der Weise, daß der Außenrand des Aufsatzstückes in einem Kassettenloch 29 der Plattenkassette 14 geführt ist.

Die Flasche 7 ist mit einer Reinigungsflüssigkeit gefüllt, die für die Naßreinigung auf einen Reinigungsverbund 8 aufgebracht wird, mit dem dann der freigelegte Ausschnitt der Speicherplatte 10, wie in Figur 6 gezeigt, in radiale Richtung gesäubert wird. Jede der Mulden 3 bis 6 ist mit zumindest einer abgerundeten Griffvertiefung 21,22,23,24 ausgerüstet, um das Entnehmen der in jeder Mulde befindlichen Utensilie zu erleichtern. Die vierte Mulde 6, die den Drehknopf 9 aufnimmt, ist noch mit einer zusätzlichen Griffvertiefung 24 ausgestattet, wobei die beiden Griffvertiefungen sich zu beiden Seiten der Mulde 6 gegenüberliegen. Der Reinigungsverbund 8 aus Textiltuch bzw. Stofftuch und Kunststoffolie stellt sicher, daß das zur Reinigung verwendete Textiltuch, d.h. die Reinigungsfläche, vor Verunreinigungen bis zum Gebrauch, durch die Kunststoffolie geschützt ist, so daß die Reinigungsverbunde ohne zusätzliche Verpackung in den Mulden 4,5 gestapelt werden können.

Das Tiefziehen der Teile 2 und 11 läßt eine konstengünstige Verarbeitung mit geringem Materialverbrauch zu sowie ein leichtes Reinigen, da die Teile 2 und 11 nahtfrei, ohne Hinterschneidungen, ausgebildet sind.

## Patentansprüche

1. Reinigungsvorrichtung für optische oder magneto-optische Platten aus zwei, durch ein Rückenband miteinander verbundenen rechteckigen oder quadratischen Teilen (2,11), die, ähnlich einem Buch, zusammenklappbar und entlang ihren Seitenkanten einrastbar sind, wobei der eine Teil (2) zumindest eine Mulde aufweist, die Utensilien für die Reinigung einer magneto-optischen oder optischen Speicherplatte aufnimmt und das andere Teil (11) eine entlang der vier Seitenkanten geschlossene Umrandung (12) aufweist, die eine Plattenkassette (14) der zum Reinigen eingelegten magneto-optischen oder optischen Speicherplatte (10) umschließt, dadurch gekennzeichnet, daß die Innenseite des einen Teils (2) erhaben ausgebildet ist und drei Mulden (3, 4, 5) enthält, von denen jede eine dem Umriß einer aufzunehmenden Utensilie (7, 8, 9) angepaßte Gestalt hat, und daß'die Innenseite des anderen Teils (11) komplementär zu dem einen Teil (2) ausgeformt ist.

2. Reinigungsvorrichtung nach Anspruch 1, dadurch gekennzeichnet, daß das die Plattenkassette (14) aufnehmende Teil (11) ein Plattenlager (13) aufweist, das die Speicherplatte (10) beim Einlegen innerhalb der Plattenkassette (14) so weit anhebt, daß die Speicherplatte reibungsfrei drehbar ist.

3. Reinigungsvorrichtung nach Anspruch 2, dadurch gekennzeichnet, daß innerhalb des einen Teils (11) eine Arretierung (15) zum Offenhalten eines Verschlusses (16) der Plattenkassette (14) angeordnet ist.

4. Reinigungsvorrichtung nach Anspruch 3, dadurch gekennzeichnet, daß die Arretierung (15) ein Steg ist, der parallel zu und in einem Abstand von etwa 8 bis 12 mm von der Umrandung (12) angebracht ist, und daß die Länge der Arretierung 32 bis 40 mm, die Höhe 5 mm und die Breite 4 bis 5 mm betragen.

5. Reinigungsvorrichtung nach Anspruch 2, dadurch gekennzeichnet, daß entlang der einen Seitenwand der Umrandung (12) des die Speicherplatte (10) aufnehmenden Teils (11) ein abgestufter Anschlag (17) mit einer abgerundeten Griffvertiefung (34) angeordnet ist und daß eine eingelegte Plattenkassette (14) gegen diesen Anschlag (17) und die Innenseite der gegenüberliegenden Seitenkante der Umrandung (12) anliegt.

6. Reinigungsvorrichtung nach Anspruch 1, dadurch gekennzeichnet, daß die Innenseite des einen Teils (2) vier Mulden (3, 4, 5, 6) aufweist und daß die Utensilien eine Flasche (7), Reinigungsverbunde (8) und einen Drehknopf (9) umfassen.

7. Reinigungsvorrichtung nach Anspruch 1, dadurch gekennzeichnet, daß die erste Mulde (3) die Flasche (7), die eine Reinigungsflüssigkeit für die Aufzeichnungsschicht der Speicherplatte (10) enthält, im Schnappsitz aufnimmt, daß die zweite und dritte Mulde (4,5) mit Reinigungsverbunden (8) gefüllt sind und daß in der vierten Mulde (6) ein Drehknopf (9) untergebracht ist, der auf eine Nabe der im anderen Teil (11) eingelegten Speicherplatte (10) aufsetzbar ist, um mit seiner Hilfe die Speicherplatte manuell zu drehen.

8. Reinigungsvorrichtung nach Anspruch 7, dadurch gekennzeichnet, daß der Drehknopf (9) ein gerändeltes Griffstück (25) aufweist, das einen kleineren Durchmesser als die Grundfläche (26) des konisch nach unten aufgeweiteten Aufsatzstückes (27) hat und daß in die Grundfläche (26) ein Gummiring (30) eingepaßt ist, der beim Aufsitzen des Drehknopfes (9) auf der Speicherplatte (10) in Reibschluß die Speicherplatte während der Drehung des Drehknopfes (9) mitnimmt.

9. Reinigungsvorrichtung nach Anspruch 8, dadurch gekennzeichnet, daß das Aufsatzstück (27) in der Grundfläche eine Aussparung (28) für die Nabe der Speicherplatte (10) hat und daß das Aufsatzstück (27) die Speicherplatte (10) in der Weise zentriert, daß der Außenrand des Aufsatzstückes in einem Kassettenloch (29) der Plattenkassette (14) geführt ist.

10. Reinigungsvorrichtung nach Anspruch 7, dadurch gekennzeichnet, daß die zweite und dritte Mulde (4,5) an drei Seiten von miteinander durchgängig verbundenen Randwülsten (18,19,20) umgeben sind und daß die zweite und dritte Mulde jeweils ein Deckel (31) abschließt, der im Schnappverschluß auf den Randwülsten aufsitzt.

11. Reinigungsvorrichtung nach Anspruch 6, dadurch gekennzeichnet, daß jede der Mulden (3,4,5,6) mit zumindest einer abgerundeten Griffvertiefung (21,22,23,24) ausgerüstet ist.

12. Reinigungsvorrichtung nach Anspruch 11, dadurch gekennzeichnet, daß die vierte Mulde (6) eine zusätzliche Griffvertiefung (24) aufweist und daß die beiden Griffvertiefungen sich zu beiden Seiten der Mulde (6) gegenüberliegen.

13. Reinigungsvorrichtung nach einem oder mehreren der Ansprüche 1 bis 12, dadurch gekennzeichnet, daß die Innenseiten der beiden Teile (2,11) mit den Mulden (3,4,5,6), Randwülsten (18,19,20) der Arretierung (15), dem Anschlag (17), Plattenlager (13) und der Umrandung (12) aus Kunststoffolie tiefgezogen sind.

## Claims

1. A cleaning apparatus for optical or magneto-optical disks comprising two rectangular or square parts (2, 11) which are connected to one another by a back strap and can be folded together, similarly to a book, and locked along their lateral edges, one part (2) having at least one trough which holds utensils for the cleaning of a magneto-optical or optical storage disk, and the other part (11) having a border (12) which runs completely along the four lateral edges and encloses a disk cassette (14) of the magneto-optical or optical storage disk (10) inserted for cleaning, wherein the inside of one part (2) is raised and contains three troughs (3, 4, 5), each of which has a shape adapted to the contour of a utensil (7, 8, 9) to be held, and the inside of the other part (11) is shaped complementary to the one part (2).

2. The cleaning apparatus as claimed in claim 1, wherein the part (11) holding the disk cassette (14) has a disk bearing (13) which, when the storage disk (10) is inserted, raises said disk inside the disk cassette (14) to such an extent that it is rotatable without friction.

3. The cleaning apparatus as claimed in claim 2, wherein a locking means (15) for keeping a shutter (16) of the disk cassette (14) open is arranged inside one part (11).

4. The cleaning apparatus as claimed in claim 3, wherein the locking means (15) is a web which is mounted parallel to, and about 8 to 12 mm away from, the border (12), and the length of the locking means is 32 to 40 mm, the height is 5 mm and the width is 4 to 5 mm.

5. The cleaning apparatus as claimed in claim 2, wherein a stepped stop (17) having a rounded grip recess (34) is arranged along one lateral edge of the border (12) of the part (11) holding the storage disk (10), and an inserted disk cassette (14) rests against this stop (17) and the inside of the opposite lateral edge of the border (12).

6. The cleaning apparatus as claimed in claim 1, wherein the inside of one part (2) has four troughs (3, 4, 5, 6), and the utensils comprise a bottle (7), cleaning composites (8) and a dial (9).

7. The cleaning apparatus as claimed in claim 1, wherein the bottle (7) which contains a cleaning liquid for the recording layer of the storage disk (10) is snapped into the first trough (3), the second and third troughs (4,5) are filled with cleaning composites (8) and a dial (9) which can be mounted on a hub of the storage disk (10) inserted in the other part (11) in order to rotate the storage disk manually with the aid of said dial is housed in the fourth trough (6).

8. The cleaning apparatus as claimed in claim 7, wherein the dial (9) has a knurled grip piece (25) which has a smaller diameter than the base surface (26) of the attachment (27) conically widening downward, and a rubber ring (30) is fitted into the base surface (26), which ring, when the dial (9) is placed on the storage disk (10) in frictional connection with said disk, drives the latter during the rotation of the dial (9).

9. The cleaning apparatus as claimed in claim 8, wherein the attachment (27) has, in the base surface, a recess (28) for the hub of the storage disk (10), and the attachment (27) centers the storage disk (10) in such a way that the outer edge of the attachment is guided in a cassette hole (29) of the disk cassette (14).

10. The cleaning apparatus as claimed in claim 7, wherein the second and third troughs (4,5) are surrounded on three sides by edge beads (18,19,20) continuously connected to one another, and the second and third troughs are each closed by a cover (31) which snaps shut onto the edge beads.

11. The cleaning apparatus as claimed in claim 6, wherein each of the troughs (3,4,5,6) is equipped with at least one rounded grip recess (21,22,23,24).

12. The cleaning apparatus as claimed in claim 11, wherein the fourth trough (6) has an additional grip recess (24), and the two grip recesses are opposite one another on both sides of the trough (6).

13. The cleaning apparatus as claimed in one or more of claims 1 to 12, wherein the insides of the two parts (2,11) together with the troughs (3,4,5,6), edge beads (18,19,20) of the locking means (15), the stop (17), the disk bearing (13) and the border (12) are thermoformed from plastics sheet.

## Revendications

1. Dispositif de nettoyage pour des disques optiques ou magnéto-optiques, constitué de deux parties rectangulaires ou carrées (2, 11), qui sont reliées entre elles par une zone de dos et qui, à la manière d'un livre, peuvent être rabattues l'une sur l'autre et peuvent être encliquetées le long de leurs bords latéraux, une partie (2) possédant au moins une cavité qui loge des ustensiles pour nettoyer le disque magnéto-optique ou optique et l'autre partie (11) comprenant un élément d'encadrement (12) fermé sur les quatre bords latéraux et qui entoure une cassette (14) du disque magnéto-optique ou optique (10) inséré pour son nettoyage, caractérisé en ce que la face intérieure d'une partie (2) est réalisée avec une forme surélevée et contient trois cavités (3, 4, 5), dont chacune a une configuration adaptée au contour d'un ustensile (7, 8, 9) devant être logé dans cette cavité, et que la face intérieure de l'autre partie (11) est agencée avec une forme complémentaire de celle de la première partie (2).

2. Dispositif de nettoyage selon la revendication 1, caractérisé en ce que la partie (11) logeant la cassette (14) du disque comporte un support de disque (13), qui soulève le disque (10) lors de son insertion dans la cassette (14), au point que le disque peut tourner sans frottement.

3. Dispositif de nettoyage selon la revendication 2, caractérisé en ce qu'un dispositif d'arrêt (15) servant à maintenir ouvert un dispositif de fermeture (16) de la cassette (14) du disque, est disposé à l'intérieur d'une partie (11).

4. Dispositif de nettoyage selon la revendication 3, caractérisé en ce que le dispositif d'arrêt (15) est une barrette d i s p o s é e parallèlement à l'élément d'encadrement (12) à une distance d'environ 8 à 12 mm, et que la longueur du dispositif d'arrêt est comprise entre 32 et 40 mm, que la hauteur est égale à 5 mm et que la longueur est comprise entre 4 et 5 mm.

5. Dispositif de nettoyage selon la revendication 2, caractérisé en ce qu'une butée étagée (17) comportant un renfoncement arrondi de préhension (34) est disposée le long d'une paroi latérale de l'élément d'encadrement (12) de la partie (11) recevant le disque (10), et qu'une cassette de disque (14) insérée s'applique contre cette butée (17) et contre le côté intérieur de l'élément d'encadrement latéral opposé de l'élément d'encadrement (12).

6. Dispositif de nettoyage selon la revendication 1, caractérisé en ce que la face intérieure de la partie (2') comprend quatre cavités (4, 5, 6) et que les ustensiles comprennent une bouteille (7), des ensembles de nettoyage (8) et un bouton rotatif (9).

7. Dispositif de nettoyage selon la revendication 1, caractérisé en ce que la première cavité (3) loge, selon une fixation à encliquetage la bouteille (7), qui contient un liquide de nettoyage pour la couche d'enregistrement du disque (10), que les seconde et troisième cavités (4, 5) sont remplies par des ensembles de nettoyage (8) et que dans la quatrième cavité (6) est disposé un bouton rotatif (9), qui peut être emmanché sur un moyeu du disque (10) inséré dans l'autre partie (11) pour faire tourner manuellement le disque à l'aide de ce bouton.

8. Dispositif selon la revendication 7, caractérisé en ce que le bouton rotatif (9) comporte un organe de préhension moleté (25), qui possède un diamètre inférieur à celui de la surface de base (26) d'une partie formant capuchon (27) qui s'élargit vers le bas avec une forme conique, et que dans la surface de base (26) est insérée une bague de caoutchouc (23) qui, lors de l'application du bouton rotatif (9) sur le disque (10), entraîne le disque selon une liaison par frottement pendant la rotation du bouton rotatif (9).

9. Dispositif de nettoyage selon la revendication 8, caractérisé en ce que la partie formant capuchon (27) possède, dans sa surface de base, une ouverture (28) pour le moyeu du disque (10) et que l'élément formant capuchon (27) centre le disque (10) de telle sorte que le bord extérieur de l'élément formant capuchon est guidé dans un trou (29) de la cassette (14) du disque.

10. Dispositif de nettoyage selon la revendication 7, caractérisé en ce que les seconde et troisième cavités (4, 5) sont entourées sur trois côtés par des rebords marginaux (18, 19, 20) qui sont reliés entre eux d'un seul tenant et que les seconde et troisième cavités sont fermées respectivement par un couvercle (21), qui prend appui sur les rebords marginaux selon une liaison par encliquetage.

11. Dispositif de nettoyage selon la revendication 6, caractérisé en ce que chacune des cavités (3, 4, 5, 6) comporte au moins un renfoncement arrondi de préhension (21, 22, 23, 24).

12. Dispositif de nettoyage selon la revendication 11, caractérisé en ce que la quatrième cavité (6) comporte un renfoncement supplémentaire de préhension (24) et que les deux renfoncements de préhension sont situés en vis-à-vis des deux côtés de la cavité (6).

13. Dispositif de nettoyage selon l'une ou plusieurs des revendications 1 à 12, caractérisé en ce que les faces intérieures des deux parties (2, 11) comportant les cavités (3, 4, 5, 6), les rebords marginaux (18, 19, 20), le dispositif d'arrêt (15), la butée (17), le support de disque (13) et l'élément d'encadrement (12) sont formées par emboutissage à partir d'une matière plastique.
